(19) Europäisches Patentamt
European Patent Office
Office européen des brevets

(11) **EP 3 575 172 A1**

(12) **EUROPEAN PATENT APPLICATION**

(43) Date of publication:
04.12.2019 Bulletin 2019/49

(51) Int Cl.:
**B60W 30/14** *(2006.01)*    **B60W 40/09** *(2012.01)*

(21) Application number: 19176591.6

(22) Date of filing: 24.05.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 31.05.2018  US 201862678297 P

(71) Applicant: **Visteon Global Technologies, Inc.**
**Van Buren Township, MI 48111-5711 (US)**

(72) Inventors:
• **PATHAK, Shashank**
**76227 Karlsruhe (DE)**
• **NADKARNI, Vijay Jayant**
**San Jose, CA 95129 (US)**
• **BAG, Suvam**
**Canton, MI 48187 (US)**

(74) Representative: **Dummett Copp LLP**
**25 The Square**
**Martlesham Heath**
**Ipswich IP5 3SL (GB)**

(54) **ADAPTIVE LONGITUDINAL CONTROL USING REINFORCEMENT LEARNING**

(57)    A system for controlling a vehicle includes a first sensor for detecting at least one environment characteristic. The system also includes a driver characteristic input device configured to receive at least one driver characteristic corresponding to a driving style of a driver. The system also includes a controller that includes a reinforcement learning adaptive cruise control that is in communication with the first sensor and the driver characteristic input device, the reinforcement learning adaptive cruise control being configured to: determine a target behavior for the vehicle based on the at least one environment characteristic and the at least one driver characteristic; and selectively control the vehicle based on the target behavior.

EP 3 575 172 A1

**Description**

**TECHNICAL FIELD**

This disclosure relates to vehicle adaptive cruise control, and in particular adaptive longitudinal control using reinforcement learning.

**BACKGROUND**

Adaptive Cruise Control (ACC) is an important feature of autonomous driving where the vehicle is designed to cruise at a speed both efficiently and safely over a wide range of scenarios and contexts. Numerous approaches for ACC have been proposed over the years. Such approaches can be divided in two major classes: 1) an environment-centric model that primarily considers the physical signals of the environment; and 2) a driver-centric ACC model that considers the human perspective as the main design principle.

The Gazis-Herman-Rothery (GHR) model was one of the first environment-centric models proposed. This was a linear-proportional control where the desired acceleration was some factor of the velocity difference between the ego vehicle and the vehicle ahead. Many variations of this simple model were suggested to address the limitation, such as asymmetry between acceleration and deceleration, the non-zero reaction time of the driver, and interaction with multiple vehicles. In order to address the fact that each driver may have a notion of safe-distance (that might vary with the speed of an ego vehicle), a different class of models was proposed. The most well-known model of this category is the Intelligent-driver model (IDM). Another approach in this class of models is where the driver reacts to the distance between the vehicles rather than the relative speed. In yet another approach, an assumption of optimal safe velocity is made. Various enhancements, including some even fairly complex enhancements, have been proposed for each of these three sub-classes. Consequently, there have also been models that prioritized simplicity, such as that identified that ACC should only consider two modes of driving: 1) in congestion (e.g., a high vehicle density area), and 2) when the ego vehicle is free of any obstacles ahead (e.g. a low vehicle density area and/or an area without other obstacles). ACC behavior may be considered as an automation where the switching happens at desired contexts.

One of the biggest flaws with the environment-centric models is the presumption that the driver is perfectly rational, time-invariant, can perceive all signals without failure, and always seeks to optimize the control. None of these is actually true in the real world. Thus, there are classes of ACC design where the driver's perspective is central, such as when a threshold to sensory perception or the size of the objects or visual angles are presumed.

Recent advancements in machine learning have fueled numerous applications in academia and various industries. In particular, supervised learning problems, such as image classification and object detection, have matured to a product-level performance. On the downside, these approaches are limited by the requirements of well-specified labelled data, which are either too expensive or too complex to obtain. Reinforcement learning, unlike supervised learning, is not limited to classification or regression problems, but can be applied to any learning problem under uncertainty and lack of knowledge of the dynamics. The approach has been applied to numerous cases where the environment model is unknown, such as with humanoids, in games, in financial markets, and many others.

Since more than a decade, high-end vehicles have been equipped with adaptive cruise control (ACC), typically through carefully designed model-based controllers. However, autonomous vehicles may require an ACC with intelligent and adaptive methods for longitudinal control of the vehicles.

**SUMMARY**

This section provides a general summary of the present disclosure and is not a comprehensive disclosure of its full scope or all of its features, aspects, and objectives.

An aspect of the disclosed embodiments is a system for controlling a vehicle. The system includes a first sensor for detecting at least one environment characteristic. The system also includes a driver characteristic input device configured to receive at least one driver characteristic corresponding to a driving style of a driver. The system also includes a controller that includes a reinforcement learning adaptive cruise control that is in communication with the first sensor and the driver characteristic input device, the reinforcement learning adaptive cruise control being configured to: determine a target behavior for the vehicle based on the at least one environment characteristic and the at least one driver characteristic; and selectively control the vehicle based on the target behavior.

Another aspect of the disclosed embodiments is a longitudinal control apparatus for controlling a vehicle. The apparatus includes a processor and at least one memory. The processor is in communication with the at least one memory. The at least one memory includes instructions that, when executed by the processor, cause the processor to: receive, from a first sensor, at least one environment characteristic; receive, from a second sensor, at least one other environment characteristic; generate a homogenized environment characteristic based on the at least one environment characteristic and the at least one other environment characteristic using sensor fusion; receive, from a driver characteristic input device, at least one driver characteristic corresponding to a driving style; and determine a target behavior for the vehicle based on the homogenized environment characteristic and the at least one driver characteristic.

These and other aspects of the present disclosure are disclosed in the following detailed description of the embodiments, the appended claims, and the accompanying figures.

## BRIEF DESCRIPTION OF THE DRAWINGS

The disclosure is best understood from the following detailed description, which is given by way of example only, when read in conjunction with the accompanying drawings. It is emphasized that, according to common practice, the various features of the drawings are not to-scale. On the contrary, the dimensions of the various features are arbitrarily expanded or reduced for clarity.

FIGs. 1A-D generally illustrate a diagram of a finite state machine for safe control, a scenario, and a cut-in and cut-out of an adaptive cruise control according to the principles of the present disclosure.

FIGs. 2A and 2B generally illustrate a simulation and a platform according to the principles of the present disclosure.

FIG. 3 generally illustrates a diagram of a learning-based adaptive cruise control according to the principles of the present disclosure.

FIGs. 4A-C generally illustrate velocity profiles of single-vehicle scenarios according to the principles of the present disclosure.

FIGs. 5A and 5B generally illustrate scenarios of validating adaptive cruise control according to the principles of the present disclosure.

FIGs. 6A and 6B generally illustrate graphs of an intelligent-driver model and a reinforcement learning adaptive cruise control in a crowded highway with lane changes according to the principles of the present disclosure.

FIGs. 7A and 7B generally illustrate graphs of a reinforcement learning adaptive cruise control having aggressive and conservative behavior according to the principles of the present disclosure.

## DETAILED DESCRIPTION

The following description is merely exemplary in nature and is not intended to limit the disclosure in its application or uses. For purposes of clarity, the same reference numbers are used in the description and drawings to identify similar elements.

Based on the experimental results of using a reinforcement learning adaptive cruise control (RL-ACC) on automotive-grade vehicle simulators, a reinforcement learning based approach provides better control of autonomous vehicles than the traditional ACC. The RL-ACC may require minimal domain knowledge, is intuitive in its design, can accommodate uncertainties, can mimic human-like behavior, and may enable human-trust in the automated system. All these aspects are crucial for a fully autonomous vehicle.

In one embodiment, a system uses a general approach to ACC that is significantly different from these two classes of ACC design. The system may include a processor and a memory. The processor may be configured to execute instructions stored on the memory. For example, the memory may include instructions that, when executed by the processor, cause the processor to perform the methods described herein. The processor may be in communication with the ACC. In some embodiments, the ACC may include the processor. The processor may be configured to selectively control the ACC, as will be described. As will be described, the ACC may include a reinforcement learning adaptive cruise control.

Because the ACC design is a highly context-dependent control problem, the system incorporates changes due to both the environment and the driving styles. For example, the system may receive one or more environment characteristics from one or more sensors, one or more remotely located computing devices (e.g., cloud computing devices, mobile devices, or other suitable computing devise not directly connected to the processor), one or more weather stations, other suitable devices or systems, or a combination thereof.

Additionally, or alternatively, the system may receive one or more driver characteristics, which correspond to a driving style and/or driving preference of the driver of the vehicle. The driver characteristics may be received from one or more sensors, one or more input devices. The one or more input devices may include input devices disposed on an interior portion of the vehicle, such as a steering wheel of the vehicle, a dash of the vehicle, a display screen within the vehicle, or other input device located within the vehicle. Additionally, or alternatively, the one or more input devices may include a mobile device, or a remotely located computing device that may be configured to analyze data received from sensors or other output devices of the vehicle and determines various driving styles of the driver. For example, the driver of the vehicle may provide input using an input device to indicate a preferred driving style. Additionally, or alternatively, the one or more sensors may detect various driving style characteristics (e.g., acceleration characteristics, deceleration characteristics, turning and/or steering control characteristics, other suitable characteristics, or a combination thereof) and provide the driving style characteristics to the processor. Additionally, or alternatively, the driving characteristic may correspond to a driving style of a driver of another vehicle. For example, the processor may receive the driving characteristics from a remotely located computer (e.g., via a vehicle-to-vehicle or vehicle-to-X, communication). The processor may determine a driving style of the driver of another vehicle using the driving characteristic. Additionally, or alternatively, the driving characteristic may correspond to a driving style of an autonomous vehicle. For example, the vehicle and/or the other vehicle may include autonomous vehicles. The processor may receive the driving characteristic from sensors of the vehicle and/or from a remotely located computer (e.g., via a vehicle-to-vehicle or vehicle-to-X, communication) corresponding to another vehicle. The driving characteristic may correspond to a driving style of the vehicle and/or the other vehicle. As will be described, the processor is configured to determine a target behavior (e.g., which may be referred to as an optimal behavior or a behavior) for the vehicle and to selectively control the vehicle based on the target behavior.

Instead of aiming for an optimal control for ACC, the system can create a human-like cruise driving that can adapt over time. Incorporating such sources of uncertainty increases the model complexity. To address such complexity, the system can use model-free approaches of artificial intelligence where exact modelling of the environment is skirted through efficient use of data. Additionally, or alternatively, the system can allow for truly adaptive cruise control that adapts not just to the environment but also the changing preferences of the driver over time.

The longitudinal control of an autonomous vehicle has two major conflicting goals: 1) to maintain as close to the set speed as possible, and 2) to have as much safe distance from the preceding vehicle as possible. The longitudinal control may also include additional objectives, such as maintaining an optimally "smooth" trajectory. Because ACC can be used as a comfort feature, in actual deployment of ACC in the vehicle, additional objectives are very crucial. In a real-world scenario, longitudinal control of the vehicle is seldom, if ever, decoupled from other aspects such as lateral control, traffic situations, and behavior of the other vehicles. However, these factors, when considered together, make the problem complex.

The systems and methods used to overcome such a complex problem are described herein. The ego vehicle is denoted by $\varepsilon$ and the vehicle ahead of the ego vehicle is denoted by $A$. The position of the ego vehicle is denoted by $x$ and the velocity and acceleration are denoted by $\dot{x}$ and $\ddot{x}$, respectively. Furthermore, separation between these vehicles is denoted by $\Delta x$, i.e., $\Delta x := x_A - x_\varepsilon$. The ego vehicle can be controlled by an action, such as a control action, which is denoted by $u_\varepsilon$. For example, the control action can be a new position of the vehicle. Acceleration (e.g., using a gas pedal) and deceleration (e.g., using a brake) is used for longitudinal control. The control action therefore can be acceleration, i.e., $u_\varepsilon \in [-b_{max}, a_{max}]_Q$, where $b_{max}$ is the maximum deceleration and $a_{max}$ is the maximum acceleration that could be achieved given the physics of the vehicle. Because the precision of actual control of acceleration (or deceleration) can be governed by the dynamics of the vehicle, the control action range can be defined over rational numbers, i.e., $u_\varepsilon \in Q$. Comfortable acceleration and deceleration limits are usually a strict subset of this range. Therefore, the function $f^\theta(\Delta x) : R \to R$ denotes the objective of maintaining a safe distance. Usually such a function would be parametrized by requirements, such as a safe distance parameter. These parameters are denoted by $\theta$. Similarly, the function $g\theta(\dot{x}_\varepsilon) : R \to R$ stands for the objective of maintaining the set speed. Because a given situation or driver preference determines such a set speed, this is subsumed in the parameter $\theta$. The dynamics of the environment is a black-box function $D(t)$, which at any instant $t > 0$ provides all necessary kinematics values, i.e., $x_\varepsilon$, $\dot{x}_\varepsilon$, $\ddot{x}_\varepsilon$, $x_A$, $\dot{x}_A$ and $\ddot{x}_A$; which are denoted by **X**.

Given the positions of the vehicles and possibly their time derivatives, classical-ACC can be defined as a control problem of finding the optimal acceleration action that maintains a desired safe distance while maintaining a set speed. Mathematically, classical-ACC is equivalent to the following functions:

$$\text{Minimize } u_\varepsilon \quad f^\theta(\Delta x) + \lambda g^\theta(\dot{x}_E)$$

$$\text{subject to} \quad u_\varepsilon \in [-b_{max}, a_{max}]$$

$$\forall t > 0, X_t = D(t)$$

Here, $\lambda \in R$ can facilitate the convex combination of the conflicting objectives of maintaining a set-speed and a safe distance. In general, such a combination may also be some nonlinear function. In this example, a linear combination is used for simplicity. The classical-ACC does not consider the driver preferences explicitly. In fact, a crucial limitation of such models is that the parameters do not have intuitive meaning when actual traffic data is considered. In other words, the parameters of the classical-ACC models cannot be set through observing actual traffic data and human behavior.

Several approaches are discussed in more detail herein. The first approach is a generalized approach to longitudinal control. Similar to the approaches mentioned above, the longitudinal control creates a problem separate from other factors such as lateral control, traffic conditions, and behaviors of the other drivers. In one embodiment, the method of the system is a function of only longitudinal variables.

The control problem involves controlling the ego vehicle in the longitudinal direction when the position of the vehicle ahead is known through some sensory input. Unlike the model-based approach, the physical model of the problem and its position may be provided in nonmetric terms, such as through a viewing angle, the image itself, or a laser scan. Radar measurements may be used as the inputs. The input variables are represented by the vector **Z**. In a simple scenario, this would be all kinematics variables provided through ideal sensors, i.e., **Z = X**. The control strategy can be used to map a given observation to the desirable action under certain behavior, i.e., $\pi(\mathbf{Z}) = u_\varepsilon$.

The intuitive behavior model of the controller can be similar to those vehicle following models that consider human aspects of driving. However, unlike those approaches, the system models all the human-like preferences and biases them under a single framework of a reward schema. For example, a conservative driver may put a higher negative reward for an unsafe close distance than for a usual driver. Similarly, in a scenario of a driver on a highway of high-speed vehicles, faster speeds may carry a greater reward.

Longitudinal (and lateral) control of the vehicle by human drivers can typically be in the order of few seconds. For example, once a driver commits to accelerating towards the vehicle ahead, the driver is not likely to change the acceleration within the next few milliseconds. Considering the abstract-level of human-like control of the vehicle greatly signifies the learning problem. This is similar to hybrid control strategy where the high-level controller is responsible for discrete jumps between low-level continuous state controllers. Similar to such approaches, a low-level controller can be used. In the industrial setting, such controllers can be designed based on specifics of the vehicle and their numerous physical parameters.

In order to obtain a generalized longitudinal controller, an artificial intelligence approach can be used with the controller design. In particular, reinforcement learning can be used to learn the controller through various active simulations. On one hand, this allows the system to harness the reward schema. On the other hand, it is a general approach that degenerates into known model-based controllers under suitable conditions.

The learning approach can be used to generalize the classical-ACC problem into one where control is learned through the interaction with the world. Given the observations of the world **Z,** the learned adaptive cruise control *RL-ACC* can be defined as a learning problem of finding the near-optimal policy $\pi$ (of acceleration control) under a given set of rewards specified for different scenes and actions. For example, $R^\pi(\mathbf{Z}_0)$, where $\mathbf{Z}_0 \in Z$ is the initial state at time $t = 0$, where after the policy, $\pi$ is followed and $Z$ is set of all possible initial states. Mathematically, RL-ACC is equivalent to following functions:

$$\text{Maximize } u_\varepsilon \quad \mathop{\mathbb{E}}_{\mathbf{Z}_0 \in \mathcal{Z}} \{R^\pi(\mathbf{Z}_0)\}$$

$$\text{subject to} \quad u_\varepsilon \in [-b_{\max}, a_{\max}]$$

$$\forall t > 0, \ \mathbf{Z}_t = \hat{D}(t)$$

This approach does not require explicitly setting the functions $f^0(\Delta x)$ and $g^0(\dot{x}_\varepsilon)$. In situations where these functions are known, the system can incorporate them into the rewarding schema.

In one embodiment, the system uses a least square policy iteration. Markovian Decision Problem (MDP) involves a probabilistic system represented by the tuple $(S, U, T, R, \gamma)$. Here, $S$ is the countable set of states of the system and $U$ is the action space. The uncertain nature of the environment is encoded in the transition system $T : S \times S \to R_{[0,1]}$. The rewards in each state (and action) can be determined by $R : S \to R$, and $\gamma \in R_{[0,1]}$ is the discounting factor. MDP is an NP-hard problem of finding an optimal policy $\pi^* : S \to U$, which maximizes the total discounted reward. One of the approaches to achieve this approximately is to define Q-value as:

$$Q^\pi(\hat{s}, \hat{u}) = \mathop{\mathbb{E}}_{u_t \sim \pi, s_t \sim \mathcal{T}} \left( \sum_{t=0}^{\infty} \gamma^t r_t | s_0 = \hat{s}, u_0 = \hat{u} \right)$$

By applying the Bellman optimality criteria - i.e., the Q-value at any step t with the state s and the action u returned by an optimal policy is the same as the optimal reward obtained at this step and following the optimal policy for all subsequent steps (*t* + 1 onward) - the system can compute the Q-value under the current policy. This can be identified as a policy evaluation. In order to improve a policy, the system may select the actions that maximize the computed Q-value. This step is policy improvement. When performed iteratively over the space of deterministic policies, policy evaluation and policy improvement result in optimal policy. This is the essence of policy iteration. However, under this algorithm, convergence is guaranteed only when the representation of the Q-values, as well as the policy, are exact such as with tabular form. For large (or infinite) state space, both these representations need to be parametrized and hence may be only approximate.

The system can use a least square Policy Iteration (LSPI). LSPI is a class of approximate policy iteration reinforcement learning algorithms. The actual policy is projected to an approximate space such that the iterative operator yields Q-values that are near optimal with respect to an actual fixed point in the sense of $L_2$-norm.

The system can use an approach for learning the ACC through LSPI. The system can first generate the data of the interaction of the vehicle with the environment. This can be performed through third-party simulators. Once the required data of interaction is available, the system applies the RL algorithm as described in the first algorithm described below. The system devises the reward schema based on the control and the environment. The system may use another domain specific aspect, such as the choice of Gaussians. The system can use the Gaussians to approximate the actual Q-value. The centers of these Gaussians can be used at the interesting parts of the state-space. Based on the number of these Gaussians, the system can construct a random weight vector. Once the system accomplishes the problem design, the system uses the RL-ACC to obtain optimum weight vector. The system can use the following Algorithm 1 for RL-ACC:

---

**Algorithm** 1 RL-ACC

---

**Require:** reliable simulator sim for the environment, rewarding schema reward, $\phi$ set of gaussians, discounting factor $\gamma$

1:    Construct sample set $D \Leftarrow$ (**sim,reward**)
2:    Initialise $\phi$ and weights $w$ randomly
3:    $A = 0$, $b = 0$
4:    **while** no convergence **do**
5:      **for** $(z, u, r, z') \in D$ **do**
6:        $A = A + \phi(z, u)(\phi(z, u) - \gamma\phi(z',\pi(u')))$
7:        $b = b + \phi(z, u)r$
8:      **end for**
9:      $w = A^{-1}b$
10:    **end while**

---

The system can use a cruise control mode. A cruise control functionality can be designed for a specific model in order to maintain a constant velocity when the ego vehicle can drive freely. This feature is primarily based on a proportional-integral-derivative (PID) controller. Through multiple simulations, the system can set the values of the proportional tuning constant ($K_p$) and the derivative constant ($K_d$), for example, to 10.0 each. A value of 10.0 is stable for the optimal smoothness at different velocities of the ego vehicle. The output of the PID controller may be limited to the maximum and minimum acceleration values. The desired acceleration can be calculated through the following equation:

$$\Delta^{cte} := \dot{x}_{cruise} - \dot{x}_{curr}, \; \ddot{x}_{PID} = K_p \times CTE + K_d \times \frac{\Delta^{cte}_{i+1} - \Delta^{cte}_i}{dt}$$

where subscripts *cruise* and *curr* stand for kinematics of the ego vehicle for cruising and current state respectively. The system can obtain the acceleration control via the PID controller. $\Delta^{cte}$ stands for cross track error and the time-step is $dt = 40ms.$

The system can combine the ACC and cruise control modes. The system can switch between the cruise mode and the ACC mode based on the threshold ACC distance (TAD), the ACC mode, and the safety mode based on the threshold safety distance (TSD) between the ego vehicle and the lead vehicle set by a user. The inter vehicle distance (IVD) can be a function of the long-range radar output from the ego vehicle.

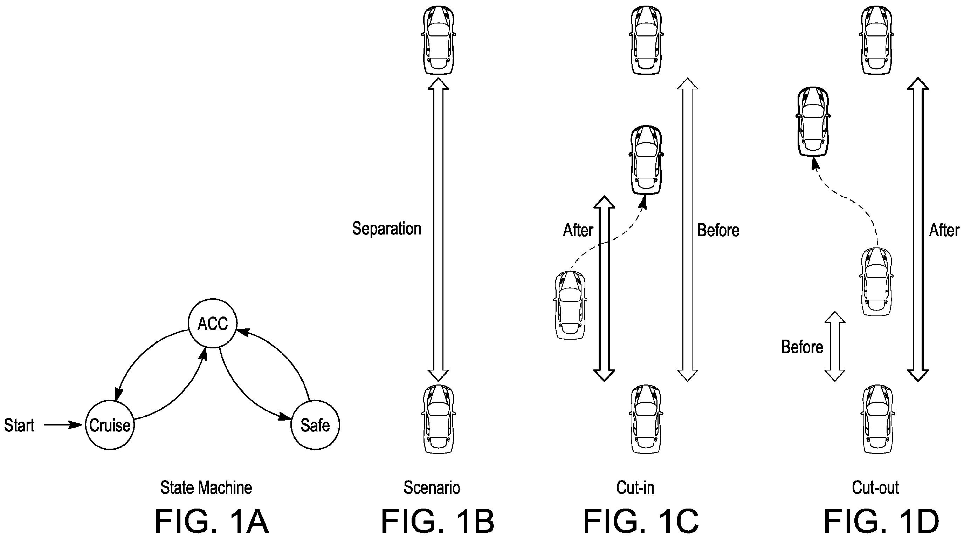

FIGS. 1A-1D illustrate finite state machine for a safe control. With the classical-ACC, the ego vehicle may be equipped with the detecting devices. For example, the ego vehicle may include a long-range detecting device, a short-range detecting device, other detecting device, or a combination thereof. In some embodiments, the detecting device may include a radar. For example, the ego vehicle may include a long-range radar, a short-range radar, or a combination thereof. The vehicle may be equipped with both long and short-range radars with limits [80, 240] and [0.2, 100] meters, respectively. Unlike problems, such as parking, the ACC does not require very close range detection. In this situation, sensor fusion can be used to homogenize the readings from both the radars. The ACC is a purely longitudinal control problem and the vehicle can be controlled in the lateral direction to maintain the lane the vehicle is driving in. The cut-ins and cut-outs are allowed to happen, which may result in the separation between the vehicles vary discontinuously as illustrated in FIGS. 1C and 1D.

Extensive experiments were carried out on the system to evaluate the RL-ACC empirically. For example, FIGS. 1A-D illustrate a simple scenario where there is only one leading vehicle with a certain well-defined trajectory. This scenario can be denoted as a single-vehicle scenario. The system can also be used in other, perhaps more realistic scenarios, in involving multiple vehicles in various lanes, all of which exhibit some sort of intelligent and rule-following behavior. This scenario can be denoted as a multi-vehicle scenario. Two automotive-grade simulators, albeit for different scenarios of evaluations, are considered.

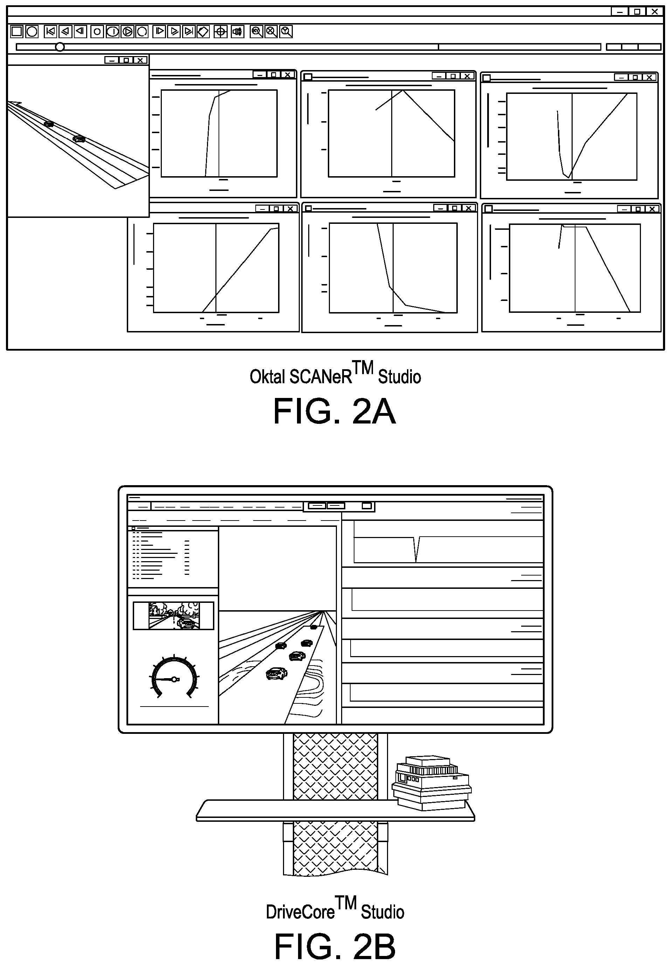

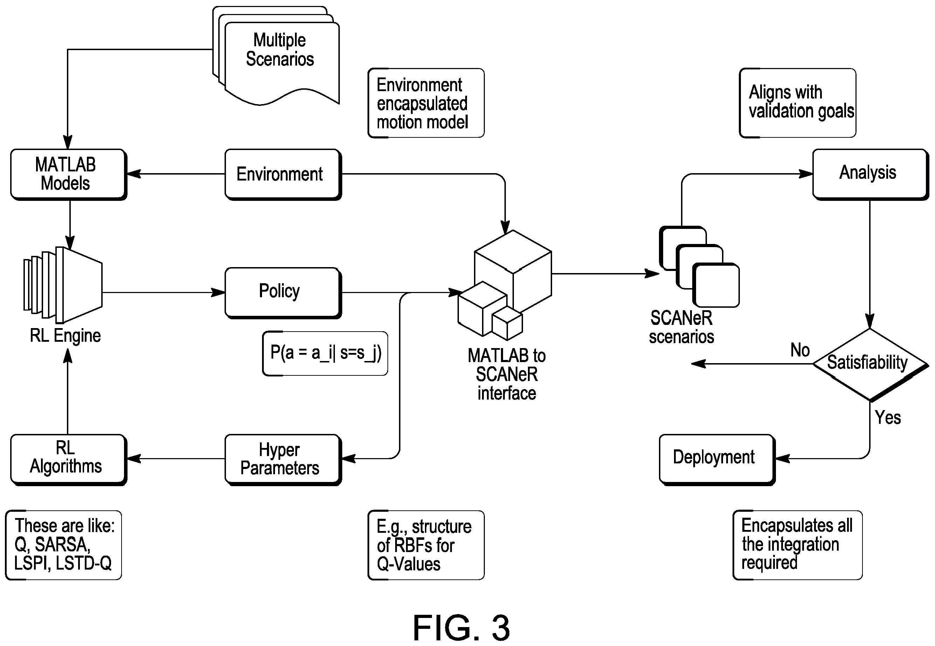

The system can use different simulators, each of which are important for different reasons. Two simulators, besides other mathematical software tests and closed loop tests, are described in more detail herein. As illustrated in FIGS. 2 and 3, the simulators used are the Oktal SCANeR™ studio and Vires, but may use other suitable systems. A model test vehicle with similar dynamics to the real vehicle can be created for these tests. In order to test different functionalities of the vehicle, as well as algorithms that are more sophisticated, multiple scenarios can be created with a different number and type of vehicles and different numbers of lanes. Sensor fusion from radars on the ego vehicle can provide the desired input for the ACC. The set-up can run the entire test vehicle's distributed system in simulation. Hence, the ACC being a closed-loop feature can be tested on top of other components like domain controller, sensor fusion, or any other desired components.

As described below, by way of example, various software and hardware pipelines can be utilized with the systems and methods. As for software, the learning algorithm can be implemented in MATLAB or other suitable software for ease of prototyping whereas during the actual deployment the learned policy can be in native C++ code or other suitable code on a distributed system set-up on a Robot Operating System (ROS). The software stack can be composed of several ROS nodes intercommunicating with each other at different levels based on their individual functionalities. The ROS nodes can communicate to the simulators through a Transmission Control Protocol/Internet Protocol (TCP/IP) network configuration, or other suitable configuration. The system can include additional and/or fewer software and hardware components and is not limited to those described herein.

The system can include various hardware. For example, the entire software stack can run on the DriveCore™ platform, as illustrated in FIG 2B, or other suitable platform. A centralized domain controller consisting of highly scalable hardware, in-vehicle middle-ware, and a PC-based software toolset can all be on a single platform handled by its three primary components - Compute, Runtime, and the Studio.

The system can handle both cases of ACC applications - on highway with high set-speed and in urban environment with low set-speed. Even in the simple set-up of one leading vehicle as illustrated in FIG. 1B, many interesting situations arise for RL-ACC. Such scenarios may start with a close-by vehicle ahead which then cuts-out increasing the separation immensely or with different maximum-allowed speeds in the lane. There are other features like driver behavior - a conservative driver in the vehicle ahead might accelerate (and decelerate) slower than a sporty one - which the system encapsulates in an environment module. This module along with the given scenario can be sufficient for implementing a theoretical MATLAB model on top of which the system can perform learning. The environment module also affects how the Oktal/Vires simulator generates the next instance of the world. The result of RL algorithm applied on these models is a policy, which can then be deployed in the Oktal/Vires simulator for visualization. In order to ensure safety of the learned policy, it is rigorously checked against desirable specification using the simulator and the scenarios. Once found satisfactorily safe, the policy can be deployed in the real vehicle, but not before passing a few other levels of software and closed loop checks as per various safety guidelines.

FIG. 3 illustrates the overall pipeline. For example, the overall pipeline of the learning-based ACC using SCANeR is illustrated. This overall pipeline is analogous to the pipeline of Vires

The system can use the RL-ACC in different scenarios. Like any other model of ACC, a criterion of success is for the ego vehicle to follow the lead vehicle at a safe distance while maintaining a smooth velocity profile. Besides that, the system also compares velocity profiles with empirical models of ACC like the IDM. Finally, the dynamic nature of RL-ACC during aggressive and conservative behaviors of the controller is compared in the same scenario.

By way of example, for single-vehicle scenarios, experiments on the system can be conducted in Oktal. Such single-vehicle scenarios may involve simple scenarios with relatively ideal conditions. In a first experiment, three lanes (versus the two lanes shown in Fig 2A) can be designed in the shape of a racetrack, with each non-curvy side greater than 3000m, where the RL-ACC is primarily tested. The ego vehicle can be modelled after any vehicle, such as the Lincoln MKZ, and the single lead vehicle can be generated by the simulator. The system can use Oktal's feature of setting checkpoints on the road. These checkpoints can be useful for altering the environment agents and other parameters.

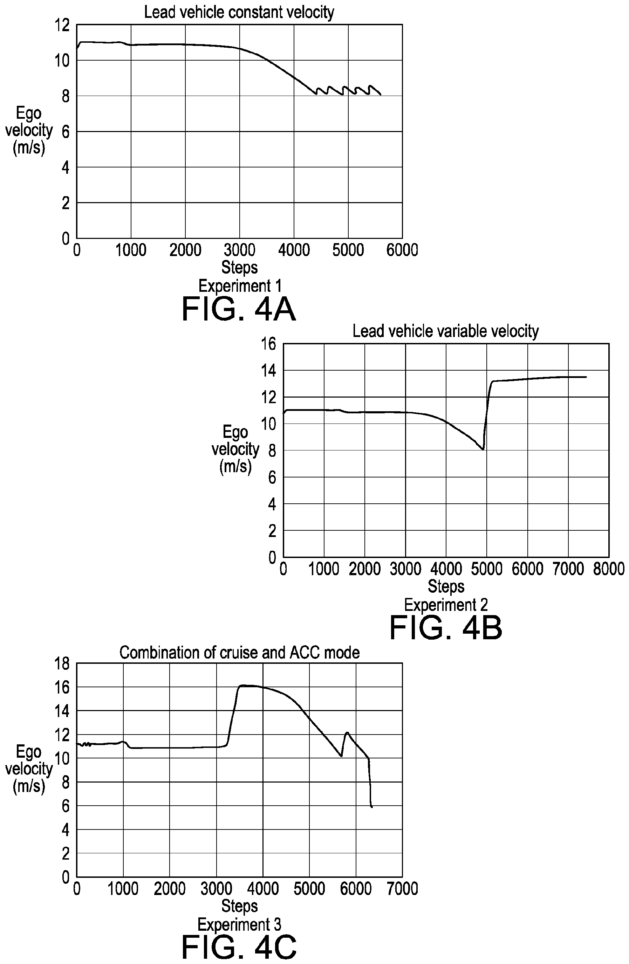

In this experiment, the lead vehicle maintains a constant velocity throughout its journey. The main objective here is to test the very basic expectation of any ACC model, i.e., for the ego vehicle to be able to adjust its velocity based on the preceding vehicle in the simplest possible scenario with no other agents involved. The velocity profile illustrated in FIG. 4A shows the drop in velocity from 11.11 m/s to 8.33 m/s between steps 3000- 4000. In this example, the model was still learning, resulting in an ACC velocity that is not perfectly smooth after stabilizing. The agent and parameter values in the single-car experiments are shown in Table 1.

Table 1

| Experiment | Parameter | Initial Conditions | Checkpoint A | Checkpoint B |
|---|---|---|---|---|
| Exp. 1 | Ego vehicle | 5.55 m/s | N/A | N/A |
| | Lead vehicle | 8.33 m/s | N/A | N/A |
| | Distance between vehicles | > 200 m | N/A | N/A |
| | Cruise speed | 11.11 m/s | N/A | N/A |
| Exp. 2 | Ego vehicle | 5.55 m/s | N/A | N/A |
| | Lead vehicle | 8.33 m/s | 13.89 m/s | N/A |
| | Distance between vehicles | < 150 m | N/A | N/A |
| | Cruise speed | 11.11 m/s | 13.89 m/s | N/A |
| Exp. 3 | Ego vehicle | 11.11 m/s | N/A | N/A |
| | Lead vehicle | 8.33 m/s | 13.89 m/s | 11.11 m/s |
| | Distance between vehicles | < 150 m | N/A | N/A |
| | Cruise speed | 11.11 m/s | 16.67 m/s | N/A |

In another exemplary scenario, the lead vehicle having a variable velocity is tested. A vehicle using the RL-ACC system can follow vehicles at a constant velocity while maintaining a safe distance. Hence, the second experiment includes the scenario with a higher level of complexity. In this second experiment, the lead vehicle changes its velocity after crossing a preset checkpoint on the simulator track, resulting in the ACC model to adapt to multiple velocities over the course of the journey. FIG 4B shows that the ego vehicle initially accelerates to reach the cruise speed (cruise mode), followed by decelerating once the ACC mode gets triggered, and then accelerates again after the lead vehicle has changed its velocity post checkpoint A. Compared to FIG. 4A, the velocity profile is smoother irrespective of the drop or rise in the velocity. In FIG. 4B, the ego vehicle decelerates over several steps in the first phase, but can also accelerate faster in a short span of time to match the velocity of the vehicle ahead. This is necessary as the lead vehicle changes its velocity to 13.89 m/s immediately after crossing checkpoint A due to simulator constraints. The RL-ACC is flexible to replicate human-like driving, which typically prefers smooth deceleration over hard breaking yet is less conservative when it comes to accelerating.

In another exemplary scenario, the velocity profile in single-vehicle scenarios is evaluated. A test of uncertainty, which is a sharp rise/drop in velocity of the lead vehicle in short ranges, can be used in such scenarios. For example, vehicles can break away from their steady motion and either accelerate/decelerate abruptly in both highways and country roads. The system can adapt to these situations. Obviously, the system can jump back and forth between the cruise and the ACC modes frequently. In this example, the lead vehicle changes its velocity to 13.89 m/s after crossing checkpoint A, moving away from the ego vehicle rapidly. As the inter-vehicle distance becomes greater than 140 m, the ego vehicle switches back to the cruise mode like initially and starts accelerating. Post checkpoint B, as the lead vehicle slows down, the ACC starts decelerating. The experiment evaluates whether the system can handle a sharp drop in velocity (5.55 m/s) over a very short distance while maintaining a safe distance with the lead vehicle. FIG. 4C shows that the system adjusts well in this situation between steps 3500-5800. The final drop in velocity is at the end of the test track where the ego vehicle hard breaks in order to gradually slow down and stop eventually, which shows that the system can handle uncertain conditions well without manual human intervention-a key requirement in autonomous vehicles.

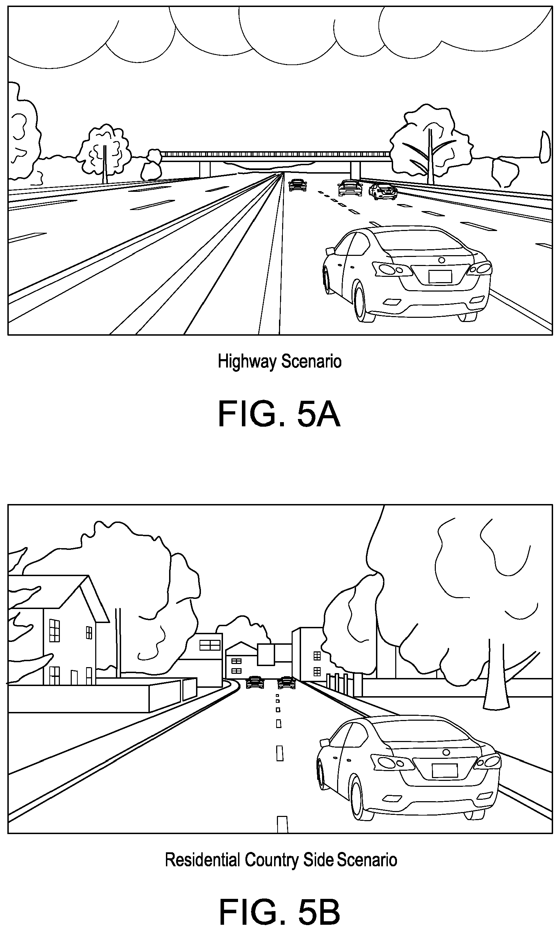

In another exemplary scenario, the multi-vehicle scenarios is evaluated. Vires can be used for conducting experiments in more complex scenarios like realistic highway and residential roads with congested traffic while comparing with empirical models of ACC like the IDM. Two different scenarios were designed for these experiments: 1) crowded highway on the German Autobahn with a relatively higher congestion of vehicles (FIG. 5A); and 2) countryside roads where the average speed is much lower besides other traffic restrictions (FIG. 5B). The former shows the results of the system on higher velocities as well as its adaptability to lane changes or other vehicles cut in/out, whereas the later creates corner cases automatically because of the shorter inter-vehicle distances. The conservative vs aggressive behavior of the system on the countryside roads is also illustrated. The ego vehicle can be modelled on any vehicle, such as the Audi-A6. The simulator can generate the other vehicles. Unlike the experiments in Oktal, there are no checkpoints. Instead, the traffic flow is generally smooth with some hard-coded intelligent behavior from other vehicles while following traffic rules of the respective scenarios.

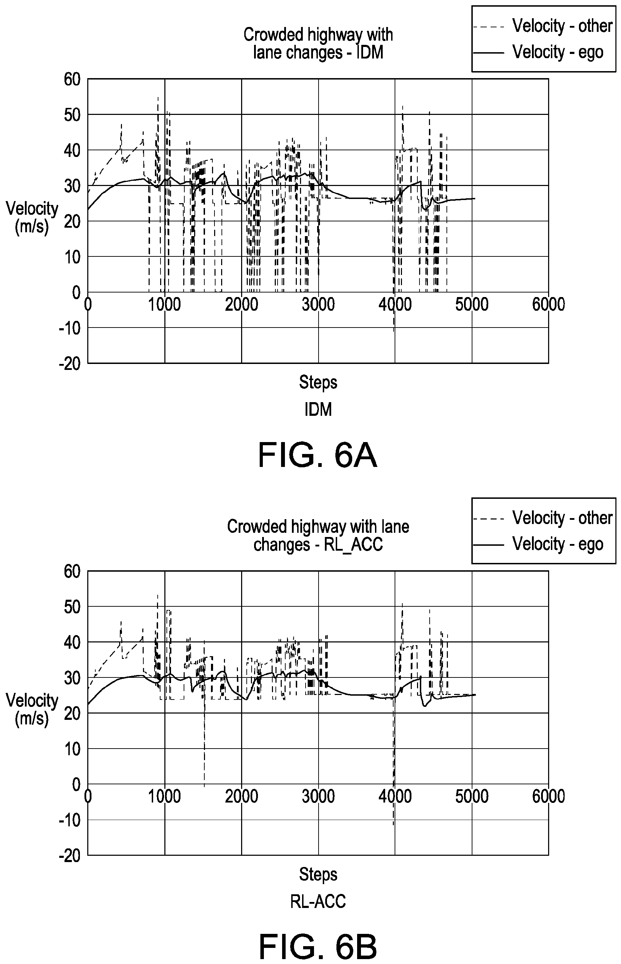

While it is relatively easier for human drivers to react to lane changes/merges with other vehicles cutting in/out (e.g. on the crowded highway with lane changes), it might be more challenging for the ACC to adapt in real-time, being dependent on the sensor fusion of outputs of both radars. Instead of reacting to this output directly, the system considers it over consecutive time steps, which enables smoother control and makes the learner context-aware. Hence, when the lead vehicle changes or is absent in the new lane, the ACC can reset to either the cruise mode (lead vehicle absent) or adjust its velocity based on the new lead vehicle's velocity in a short span of time. In this example, the system is tested on a long stretch of the Autobahn while manually changing lanes a number of times. FIG. 6A illustrates the IDM and FIG. 6B illustrates the RL-ACC in scenarios involving a crowded highway with lane changes. The ego vehicle adjusts well, even in situations where the lead vehicle is out of range of the radar (blue line hitting zero). With the system being model-free, RL-ACC can act in a more aggressive or conservative manner depending on the inter vehicle distance or average speed of the other vehicles in the respective lane and tuning of the rewards.

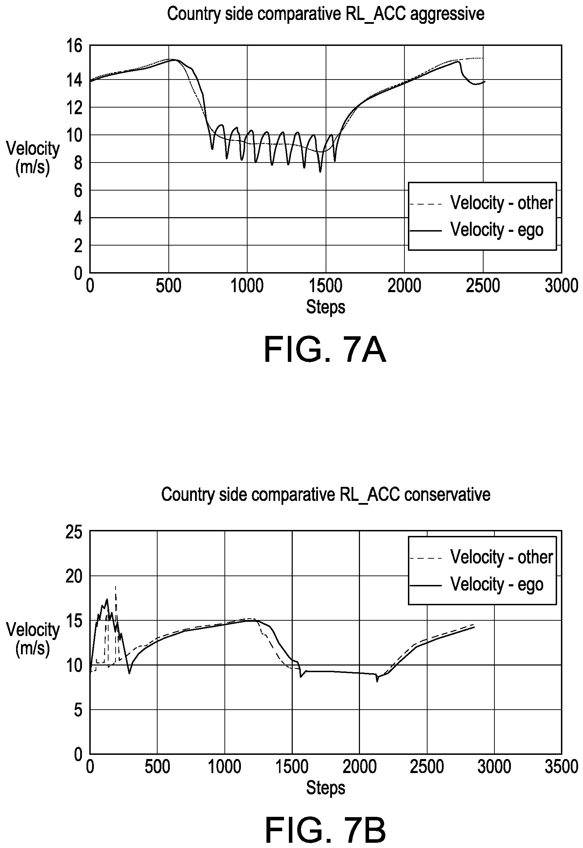

In another exemplary scenario, conservative versus aggressive RL-ACC on countryside roads is evaluated. An advantage of the RL-ACC over IDM is RL-ACC's ability to adapt to different environments and driving conditions. Ideally, ACC should behave differently in highway scenarios and city roads. In the former, it should behave more conservatively, i.e., the distance between vehicles should always be relatively large because of the average speed, whereas this distance would be a lot less in the later, resulting in a more aggressive behavior of the ACC. In this experiment, the system behaves in a conservative and an aggressive manner on countryside roads. FIG. 7A illustrates RL-ACC aggressive behavior and FIG. 7B illustrates RL-ACC conservative behavior. The two subplots in FIG. 7 are produced from different episodes of the journey, thus having different velocity trajectories. FIG. 7 illustrates that the conservative RL-ACC maintains a smoother velocity profile than the aggressive model. The aggressive behavior of the vehicle here is the result of impatient driving style. In this example, the controller is designed for highway autopilot, such that the system sets a high reward for optimal separation. When the system is penalized appropriately for acceleration and deceleration, a smoother conservative behavior can be obtained.

Typically, ACC is approached as a model-based controller design. The systems and methods described herein fix the control problems of ACC by using artificial intelligence techniques. In particular, the systems and methods use RL-ACC. While the classical approach-IDM-is widely used as the go-to ACC model in the automotive industry and performs decently on the highways, due to its model-based approach, it lacks the ability to adapt to the environments or driving preferences. Because the RL-ACC does not require domain knowledge, it can be trained irrespective of the environment. Moreover, the systems and methods using this approach also make the controller design intuitive from the perspective of human driving. Complex controls can arise out of rather simple rewarding strategies. This enhances both the reasoning of the changes in control of the vehicle as well as trust of human passengers when the autonomous vehicle is utilizing ACC. The systems and methods can create human-like autonomous driving.

Furthermore, the systems and methods provide the safety of learned control and devise a general human-like controller for autonomous driving. In order to achieve the former, systematic verification of the controller can be performed using state-of-the-art formal methods. For achieving the latter goal, one of the approaches is to invoke the deep learning methods that can ingest the input images and learn ACC as some sort of optimal behavior in different contexts.

In some embodiments, a system for controlling a vehicle includes a first sensor that detects at least one environment characteristic. The system also includes a driver characteristic input device configured to receive at least one driver characteristic corresponding to a driving style of a driver of the vehicle. The system also includes a reinforcement learning adaptive cruise control configured to: determine a target behavior for the vehicle based on the at least one environment characteristic and the at least one driver characteristic; and selectively control the vehicle based on the target behavior.

In some embodiments, the at least one environment characteristic includes a weather condition proximate the vehicle. In some embodiments, the at least one environment characteristic indicates that the vehicle is being driven in a high vehicle density area. In some embodiments, the at least one environment characteristic indicates that the vehicle is being driven in a low vehicle density area. In some embodiments, the driver characteristic input device is disposed on an interior portion of the vehicle. In some embodiments, the driver characteristic input device is disposed on mobile computing device. In some embodiments, the at least one driver characteristic indicates that the driver is a conservative driver. In some embodiments, the at least one driver characteristic indicates that the driver is an aggressive driver. In some embodiments, the first sensor includes a short-range radar. In some embodiments, the system also includes a second sensor configured to detect at least one other environment characteristic. In some embodiments, the second sensor includes a long-range radar, and wherein the reinforcement learning adaptive cruise control is further configured to use sensor fusion to generate a homogenized environment characteristic based on the at least one environment characteristic and the at least one other environment characteristic. In some embodiments, the reinforcement learning adaptive cruise control is further configured to determine the target behavior for the vehicle based on the homogenized environment characteristic and the at least one driver characteristic.

In some embodiments, a longitudinal control apparatus for controlling a vehicle includes a processor and at least one memory. The processor is in communication with the at least one memory. The at least one memory includes instructions that, when executed by the processor, cause the processor to: receive, from a first sensor, at least one environment characteristic; receive, from a second sensor, at least one other environment characteristic; generate a homogenized environment characteristic based on the at least one environment characteristic and the at least one other environment characteristic using sensor fusion; receive, from a driver characteristic input device, at least one driver characteristic corresponding to a driving style of a driver of the vehicle; determine a target behavior for the vehicle based on the homogenized environment characteristic and the at least one driver characteristic; and selectively control the vehicle based on the target behavior.

In some embodiments, the first sensor includes a short-range radar and the second sensor includes a long-rage radar. In some embodiments, the at least one environment characteristic includes a weather condition proximate the vehicle. In some embodiments, the at least one environment characteristic indicates that the vehicle is being driven in a high vehicle density area. In some embodiments, the at least one environment characteristic indicates that the vehicle is being driven in a low vehicle density area. In some embodiments, the driver characteristic input device is disposed on an interior portion of the vehicle. In some embodiments, the driver characteristic input device is disposed on mobile computing device. In some embodiments, the at least one driver characteristic indicates that the driver is a conservative driver.

In some embodiments, a system for controlling a vehicle includes a first sensor for detecting at least one environment characteristic. The system also includes a driver characteristic input device configured to receive at least one driver characteristic corresponding to a driving style of a driver. The system also includes a controller that includes a reinforcement learning adaptive cruise control that is in communication with the first sensor and the driver characteristic input device, the reinforcement learning adaptive cruise control being configured to: determine a target behavior for the vehicle based on the at least one environment characteristic and the at least one driver characteristic; and selectively control the vehicle based on the target behavior.

In some embodiments, the at least one environment characteristic includes a weather condition proximate the vehicle. In some embodiments, the at least one environment characteristic indicates that the vehicle is being driven in a high vehicle density area. In some embodiments, the at least one environment characteristic indicates that the vehicle is being driven in a low vehicle density area. In some embodiments, the driver characteristic input device is disposed on an interior portion of the vehicle. In some embodiments, the driver characteristic input device is disposed on a mobile computing device. In some embodiments, the at least one driver characteristic indicates that the driver is a conservative driver. In some embodiments, the at least one driver characteristic indicates that the driver is an aggressive driver. In some embodiments, the first sensor includes a short-range detection device. In some embodiments, the system also includes a second sensor configured to detect at least one other environment characteristic. In some embodiments, the second sensor includes a long-range detection device, and wherein the reinforcement learning adaptive cruise control is further configured to use sensor fusion to generate a homogenized environment characteristic based on the at least one environment characteristic and the at least one other environment characteristic. In some embodiments the reinforcement learning adaptive cruise control is further configured to determine the target behavior for the vehicle based on the homogenized environment characteristic and the at least one driver characteristic.

In some embodiments, a longitudinal control apparatus for controlling a vehicle includes a processor and at least one memory. The processor is in communication with the at least one memory. The at least one memory includes instructions that, when executed by the processor, cause the processor to: receive, from a first sensor, at least one environment characteristic; receive, from a second sensor, at least one other environment characteristic; generate a homogenized environment characteristic based on the at least one environment characteristic and the at least one other environment characteristic using sensor fusion; receive, from a driver characteristic input device, at least one driver characteristic corresponding to a driving style; and determine a target behavior for the vehicle based on the homogenized environment characteristic and the at least one driver characteristic.

In some embodiments, the first sensor includes a short-range detection device and the second sensor includes a long-rage detection device. In some embodiments, the driving style corresponds to a driving style of a driver. In some embodiments, the driving style corresponds a driving style of an autonomous vehicle. In some embodiments, the processor is further configured to mimic human control of the vehicle using the target behavior for the vehicle. In some embodiments, the processor is further configured to control the vehicle to follow at least one other vehicle at a constant velocity while maintaining a safe distance between the vehicle and the at least one other vehicle. In some embodiments, the processor is further configured to conservatively control the vehicle in response to the driving style indicating a conservative driving style. In some embodiments, the processor is further configured to aggressively control the vehicle in response to the driving style indicating an aggressive driving style.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

Various terms are used to refer to particular system components. In the above discussion and in the claims, the terms "including" and "comprising" are used in an openended fashion, and thus should be interpreted to mean "including, but not limited to...." Also, the term "couple" or "couples" is intended to mean either an indirect or direct connection. Thus, if a first device couples to a second device, that connection may be through a direct connection or through an indirect connection via other devices and connections.

"Controller" shall mean individual circuit components, an application-specific integrated circuit (ASIC), a microcontroller with controlling software, a digital signal processor (DSP), a processor with controlling software, a field programmable gate array (FPGA), or combinations thereof.

The word "example" is used herein to mean serving as an example, instance, or illustration. Any aspect or design described herein as "example" is not necessarily to be construed as preferred or advantageous over other aspects or designs. Rather, use of the word "example" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an implementation" or "one implementation" throughout is not intended to mean the same embodiment or implementation unless described as such.

Implementations the systems, algorithms, methods, instructions, etc., described herein can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors, or any other suitable circuit. In the claims, the term "processor" should be understood as encompassing any of the foregoing hardware, either singly or in combination. The terms "signal" and "data" are used interchangeably.

As used herein, the term module can include a packaged functional hardware unit designed for use with other components, a set of instructions executable by a controller (e.g., a processor executing software or firmware), processing circuitry configured to perform a particular function, and a self-contained hardware or software component that interfaces with a larger system. For example, a module can include an application specific integrated circuit (ASIC), a Field Programmable Gate Array (FPGA), a circuit, digital logic circuit, an analog circuit, a combination of discrete circuits, gates, and other types of hardware or combination thereof. In other embodiments, a module can include memory that stores instructions executable by a controller to implement a feature of the module.

Further, in one aspect, for example, systems described herein can be implemented using a general-purpose computer or general-purpose processor with a computer program that, when executed, carries out any of the respective methods, algorithms, and/or instructions described herein. In addition, or alternatively, for example, a special purpose computer/processor can be utilized which can contain other hardware for carrying out any of the methods, algorithms, or instructions described herein.

Further, all or a portion of implementations of the present disclosure can take the form of a computer program product accessible from, for example, a computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or a semiconductor device. Other suitable mediums are also available.

The above-described embodiments, implementations, and aspects have been described in order to allow easy understanding of the present invention and do not limit the present invention. On the contrary, the invention is intended to cover various modifications and equivalent arrangements included within the scope of the appended claims, which scope is to be accorded the broadest interpretation to encompass all such modifications and equivalent structure as is permitted under the law.

**Claims**

1. A system for controlling a vehicle, the system comprising:

   a first sensor for detecting at least one environment characteristic;
   a driver characteristic input device configured to receive at least one driver characteristic corresponding to a driving style of a driver; and
   a controller that includes a reinforcement learning adaptive cruise control that is in communication with the first sensor and the driver characteristic input device, the reinforcement learning adaptive cruise control being configured to:

   determine a target behavior for the vehicle based on the at least one environment characteristic and the at least one driver characteristic; and
   selectively control the vehicle based on the target behavior.

2. The system of claim 1, wherein the at least one environment characteristic includes a weather condition proximate the vehicle.

3. The system of claim 1 or claim 2, wherein the at least one environment characteristic indicates that the vehicle is being driven in a high vehicle density area.

4. The system of claim 1 or claim 2, wherein the at least one environment characteristic indicates that the vehicle is being driven in a low vehicle density area.

5. The system of any one of the preceding claims, wherein the driver characteristic input device is disposed on an interior portion of the vehicle.

6. The system of any one of claims 1 to 4, wherein the driver characteristic input device is disposed on a mobile computing device.

7. The system of any one of the preceding claims, wherein the at least one driver characteristic indicates that the driver is a conservative driver.

8. The system of any one of claims 1 to 6, wherein the at least one driver characteristic indicates that the driver is an aggressive driver.

9. The system of any one of the preceding claims, wherein the first sensor includes a short-range detection device.

10. The system of claim 9, further comprising a second sensor configured to detect at least one other environment characteristic.

11. The system of claim 10, wherein the second sensor includes a long-range detection device, and wherein the reinforcement learning adaptive cruise control is further configured to use sensor fusion to generate a homogenized environment characteristic based on the at least one environment characteristic and the at least one other environment characteristic.

12. The system of claim 11, wherein the reinforcement learning adaptive cruise control is further configured to determine the target behavior for the vehicle based on the homogenized environment characteristic and the at least one driver characteristic.

13. A longitudinal control apparatus for controlling a vehicle, the apparatus comprising:

   a processor; and
   at least one memory that includes instructions that, when executed by the processor, cause the processor to:

   receive, from a first sensor, at least one environment characteristic;
   receive, from a second sensor, at least one other environment characteristic;
   generate a homogenized environment characteristic based on the at least one environment characteristic and the at least one other environment characteristic using sensor fusion;

receive, from a driver characteristic input device, at least one driver characteristic corresponding to a driving style; and

determine a target behavior for the vehicle based on the homogenized environment characteristic and the at least one driver characteristic.

14. The apparatus of claim 13, wherein the driving style corresponds to a driving style of a driver.

15. The apparatus of claim 13, wherein the driving style corresponds a driving style of an autonomous vehicle.

State Machine

FIG. 1A

Separation

Scenario

FIG. 1B

After

Before

Cut-in

FIG. 1C

Before

After

Cut-out

FIG. 1D

EP 3 575 172 A1

Oktal SCANeR<sup>TM</sup> Studio

# FIG. 2A

DriveCore<sup>TM</sup> Studio

# FIG. 2B

Multiple Scenarios

Environment encapsulated motion model

Aligns with validation goals

MATLAB Models

Environment

Analysis

RL Engine

Policy

$P(a = a\_i| s=s\_j)$

MATLAB to SCANeR interface

SCANeR scenarios

No

Satisfiability

Yes

RL Algorithms

Hyper Parameters

Deployment

These are like: Q, SARSA, LSPI, LSTD-Q

E.g., structure of RBFs for Q-Values

Encapsulates all the integration required

FIG. 3

EP 3 575 172 A1

**Lead vehicle constant velocity**

Experiment 1

# FIG. 4A

**Lead vehicle variable velocity**

Experiment 2

# FIG. 4B

**Combination of cruise and ACC mode**

Experiment 3

# FIG. 4C

Highway Scenario

# FIG. 5A

Residential Country Side Scenario

# FIG. 5B

Crowded highway with lane changes - IDM

IDM

FIG. 6A

Crowded highway with lane changes - RL_ACC

RL-ACC

FIG. 6B

Country side comparative RL_ACC aggressive

FIG. 7A

Country side comparative RL_ACC conservative

FIG. 7B

Europäisches
Patentamt
European
Patent Office
Office européen
des brevets

**EUROPEAN SEARCH REPORT**

Application Number

EP 19 17 6591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/369052 A1 (NAGY AKOS [US] ET AL) 28 December 2017 (2017-12-28) * paragraph [0016] - paragraph [0066]; claims 1,5,9,10; figures 1-9 * | 1-15 | INV. B60W30/14 B60W40/09 |
| X | US 2016/026182 A1 (BORODITSKY VLADIMIR [US] ET AL) 28 January 2016 (2016-01-28) * paragraph [0029] - paragraph [1320]; figures 1-19 * | 1-15 | |
| X | KR 2015 0066303 A (KOREA ELECTRONICS TELECOMM [KR]) 16 June 2015 (2015-06-16) * paragraph [0013] - paragraph [0070]; figures 1-11 * | 1,5-10, 12-15 | |
| A | Ricardo Omar Chavez Garcia ET AL: "Multiple sensor fusion for detection, classification and tracking of moving objects in driving environments", , 25 September 2014 (2014-09-25), XP055613087, Retrieved from the Internet: URL:https://hal.archives-ouvertes.fr/tel-0 1082021/document [retrieved on 2019-08-29] * the whole document * | 11-15 | TECHNICAL FIELDS SEARCHED (IPC) B60W |

-/--

The present search report has been drawn up for all claims

| Place of search | Date of completion of the search | Examiner |
|---|---|---|
| The Hague | 30 August 2019 | Signorini, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 19 17 6591

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Zhaohui Hu ET AL: "Adaptive Cruise Control Based on Reinforcement Leaning with Shaping Rewards", Journal of Advanced Computational Intelligence and Intelligent Informatics, 20 May 2011 (2011-05-20), pages 351-356, XP055613086, DOI: 10.20965/jaciii.2011.p0351 Retrieved from the Internet: URL:https://ieeexplore.ieee.org/iel5/595818 70/5967347/05967371.pdf [retrieved on 2019-08-29] * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 30 August 2019 | Signorini, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 17 6591

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2019

| Patent document cited in search report | Publication date | Patent family member(s) | Publication date |
|---|---|---|---|
| US 2017369052 A1 | 28-12-2017 | CN 107249954 A<br>EP 3240714 A1<br>US 2017369052 A1<br>WO 2016109540 A1 | 13-10-2017<br>08-11-2017<br>28-12-2017<br>07-07-2016 |
| US 2016026182 A1 | 28-01-2016 | EP 3195287 A1<br>US 2016026182 A1<br>WO 2016012901 A1 | 26-07-2017<br>28-01-2016<br>28-01-2016 |
| KR 20150066303 A | 16-06-2015 | NONE | |

EPO FORM P0459

For more details about this annex : see Official Journal of the European Patent Office, No. 12/82